# EUROPÄISCHE PATENTSCHRIFT

(11) **EP 0 496 913 B1**
(45) Veröffentlichungstag und Bekanntmachung des Hinweises auf die Patenterteilung: **19.04.1995**
(21) Anmeldenummer: 91101194.8
(22) Anmeldetag: 30.01.1991
(51) Int. Cl.: B01D 53/34, C02F 9/00, C02F 1/66

(54) **Verfahren zur Rauchgasreinigung von Feuerungsanlagen, insbesondere Müllverbrennungsanlagen**
Process for purifying flue gas from combustion units, especially from waste incinerators
Procédé pour la purification de fumée provenant d'installations de combustion, en particulier d'incinérateurs de déchets

(43) Veröffentlichungstag der Anmeldung: 05.08.1992
(73) Patentinhaber: Kollmann, Hermann, Dr., D-84028 Landshut (DE)
(72) Erfinder: Kollmann, Hermann, Dr., D-84028 Landshut (DE)
(74) Vertreter: Riederer Freiherr von Paar zu Schönau, Anton

(56) Entgegenhaltungen:
- EP-A- 0 123 856
- EP-A- 0 301 452
- DE-A- 2 709 231
- DE-A- 3 702 107
- VGB KRAFTWERKSTECHNIK, Bd. 64, Nr. 8, August 1984, DE; B. SCHÖNBUCHER et al.,Seiten 679-688

## Beschreibung

Die Erfindung bezieht sich auf ein Verfahren zur Rauchgasreinigung von Feuerungsanlagen, insbesondere Müllverbrennungsanlagen, wobei der Feuerung von einer kommunalen Abwasserreinigungsanlage entnommenes Ammoniak zugeführt wird.

Gegebenenfalls können zusätzlich aus den Rauchgasen saure Bestandteile ausgewaschen und durch basische Medien neutralisiert werden, denen Kalkmilch zugesetzt worden ist, und/oder der Feuerung basische Medien zugeführt werden.

Bei größeren Feuerungsanlagen und speziell bei Müllverbrennungsanlagen, Schwelgasbrennern usw. entstehen als Schadstoffe Stickoxide (NOₓ) und außerdem unter anderem Chlorwasserstoff (HCl), Schwefeldioxid (SO₂) sowie polychlorierte Dioxine und Furane. Zur Reinigung der Rauchgase von diesen Schadstoffen werden verschiedene Techniken angewandt. Z. B. können die Stickoxide durch Einführen von Ammoniak in den Feuerraum, also durch Beimischen in die Verbrennungsluft oder in die Rauchgase oder auch durch Einsprühen von NH₃-Wasser in den Feuerraum, reduziert werden. Hierbei ist es auch bekannt (DE-A-37 02 107), den Ammoniak aus mit N- und S-Salzen angereicherten Abwässern hinter simultanen SO₂- und NOₓ-Waschanlagen zu gewinnen. Es ist auch bekannt, Gülle in Verbrennungsanlagen einzubringen, um hierdurch die Stickoxide zu reduzieren und auch einen Teil der Dioxine und Furane zu adsorbieren. Außerdem soll fäkales Abwasser aus einem Tank in die Verbrennungsanlage eingesprüht werden (JP-A-2-230008), wobei jedoch die Ammoniakkonzentration sich als problematisch niedrig erweist. In Ammoniak (NH₃) ist das Stickstoffatom elektrisch-negativ und in den Stickoxiden ist das Stickstoffatom elektrisch-positiv. Bei 600°C bis 800°C reagieren diese Substanzen unter Bildung von elementarem Stickstoff (N₂), Wasserdampf und gegebenenfalls weiteren Restgasen.

Chlorwasserstoff, das bei Müllverbrennungsanlagen aufgrund des vielen verbrannten Polyvinylchlorids in großen Mengen anfällt, kann durch basisches Waschwasser ausgewaschen werden, dem Kalkmilch (Ca(OH)₂) - bzw. hinsichtlich SO₂ Natronlauge (NaOH) - beigefügt ist; und die Dioxine und Furane, schließlich, sind adsorbierbare Stoffe, die dadurch ausgefiltert werden, daß dem Waschwasser noch Adsorbentien, nämlich aufgeschlämmte Aktivkohle, beigefügt werden. Außerdem hemmt auch Ammoniak die katalytische Dioxinbildung, wofür eine chemische Veränderung des Katalysators CuCl₂ verantwortlich sein könnte. Die Rauchgaswäsche wird hierdurch aber nicht überflüssig.

Die Bereitstellung der verschiedenen für die Abgaswäsche, die Reduktion von Stickoxiden und die Schadstoffadsorption in großen Mengen benötigten Stoffe stellt einen problematischen Aufwand dar. Es ist bekannt (DE-A-27 09 231), einen Füllkörperabsorber mit alkalischem Abwasser zu berieseln, dem andererseits Rauchgase zugeleitet werden, so daß es zu einer wechselseitigen Neutralisierung kommt. Bei einem anderen bekannten Verfahren (EP-A-123856) zur Entfernung oder Isolierung von Schadstoffen aus Abgasen werden diese mit einer wässerigen Bindemittelsuspension kontaktiert, die aus einem Klärschlamm, insbesondere mit Herbstlaub versetztem Klärschlamm, besteht.

Durch die Erfindung soll die Bereitstellung dieser Stoffe zur Eliminierung der Stickoxide vereinfacht werden.

Dies wird gemäß der Erfindung dadurch erreicht, daß man den Ammoniak aus Teilströmen aus der Schlammbehandlung verwendet, und zwar zumindest teilweise aus separiertem Wasser, das man durch Eindickung von Faulschlamm erhält und das stark basisch eingestellt worden ist. Durch die erzielte starke Basizität wird das Gleichgewicht zwischen Ammonium und Ammoniak zugunsten des für den gewünschten Zweck allein wirksamen Ammoniaks verschoben, und das durch die Eindickung von Faulschlamm separierte Wasser, das sogenannte Preßwasser, enthält eine ausreichende Konzentration für eine wirksame Rauchgasentgiftung. Gewöhnlich ist das Preßwasser allerdings auf einen pH-Wert von 7,8 bis 8 eingestellt (Fachbuch "Abwassertechnologie", Springer-Verlag, Berlin 1984, Seite 867). Der pH-Wert ist demgegenüber durch passende Zugaben, am einfachsten durch verstärkte Kalkung, zu erhöhen. Bei einem pH-Wert von 9,25 liegt das Gleichgewicht der NH₄⁺-NH₃-Dissoziation bei Raumtemperatur bei 50/50 % (Holleman, Wiberg "Lehrbuch der anorganischen Chemie", Berlin 1964, S. 229-232) und bei pH=12 bei 100 % Ammoniak. Dem so hoch basisch eingestellten Preßwasser mit hohem Ammoniakgehalt kann dann noch, um auch dessen allerdings sehr viel niedrigeren Ammoniakgehalt noch auszunützen, Überstandswasser aus dem Faulturm beigemischt werden. Diese Maßnahmen können dadurch ergänzt werden, daß auch die basischen Medien für die Rauchgaswäsche zumindest anteilig aus Teilströmen aus der Schlammbehandlung von kommunalen Abwasserreinigungsanlagen bestehen, die mit Kalkmilch behandelt sind, und/oder daß man, wenn der Feuerung basische Medien zugeführt werden, hierfür mit Kalkmilch behandelten, entwässerten Klärschlamm verwendet.

In kommunalen Abwasserkläranlagen wird üblicherweise die Entwässerbarkeit von Klärschlämmen durch Zugabe von Kalkmilch verbessert. In Teilströmen der Schlammbehandlung treten hohe Ammonium- bzw. Ammoniakkonzentrationen auf. Das Ammoniak kann nach dem Stand der Technik durch Lufteinblasung ausgetrieben und durch saure Wäscherlösungen neutralisiert werden. Gemäß der Erfindung wird also das Preßwasser stark basisch gemacht, insbesondere mit Kalk versetzt, und der hohe Ammoniakgehalt, nach dem Stand der Technik Problemträger hinsichtlich der Entsorgung, wird nutzbringend zur Rauchgasreinigung eingesetzt. Anstelle also basische Medien und Ammoniak einerseits zum Zwecke der Rauchgasreinigung zu erzeugen und entsprechende Stoffe andererseits durch zusätzliche Maßnahmen zu entsorgen, werden diese bei der Abwasserklärung anfallenden Substanzen nutzbringend zur Rauchgasreinigung eingesetzt.

Dem Schlamm aus dem Schlamm-Faulturm ist vor dem Absetzen oder Auspressen Kalkmilch zugesetzt worden, und zwar in einer Menge in der Größenordnung von beispielsweise 300 g Ca(OH)₂ je Kilogramm Trockensubstanz des Schlamms. Das aus der Schlammentwässerung resultierende Wasser enthält also einen hohen Gehalt an Ca(OH)₂. Es ist sehr stark basisch mit einem pH-Wert in der Größenordnung von 12. Dieses Wasser wird abgezogen und erfindungsgemäß verwendet. Es kann auch gemischt mit einem anderen Teilstrom aus dem Schlamm-Faulturm, nämlich dem sogenannten Überstandswasser, das über dem am Boden abgesetzten Schlamm steht, verwendet werden. Es handelt sich beim Überstandswasser um Wasser, das selbst trüb ist und noch zahlreiche Schwebstoffe enthält. Der pH-Wert wird durch diese Verdünnung wieder etwas erniedrigt und damit das Gleichgewicht leicht zu Ungunsten von NH₃ verschoben, jedoch wird andererseits mit dem Überstandswasser eine weitere NH₃-Quelle nutzbar gemacht.

Die so erhaltene Substanz wird gemäß bevorzugter Verfahrensdurchführung zur Müllverbrennungsanlage verbracht und dort wird zunächst das Ammoniak ausgetrieben und der Feuerung zugesetzt; das basische Wasser wird dann zur Gaswaschanlage oder zu einer der Gaswaschanlage nachgeschalteten Neutralisationsanlage verbracht und als basisches Medium, auch mit Trübstoffen, eingesetzt. Durch seinen Kalkanteil wird das Chlorwasserstoffgas aus den Rauchgasen ausgewaschen und/oder wird ausgewaschene Salzsäure neutralisiert, und die im Waschwasser enthaltenen Trübstoffe wirken als Adsorbentien, an denen die weiteren Schadstoffe, insbesondere polychlorierte Dioxine und polychlorierte Furane, sich anlagern.

Bei Zugabe des basisch gekalkten entwässerten Klärschlamms zum Brenngut in Müllverbrennungsanlagen wird das durch die Verbrennung chlorhaltiger Substanzen entstehende Chlor bereits in großem Maße am Orte der Entstehung, also im Feuerbereich, gebunden und steht damit nicht mehr zur De-novo-Synthese oder zur Aufchlorierung von Dioxinen und Furanen zur Verfügung.

Weitere Einzelheiten, Vorteile und Weiterbildungen der Erfindung ergeben sich aus der folgenden Beschreibung bevorzugter Ausführungsbeispiele unter Bezugnahme auf die schematische Zeichnung. Es zeigen:
- Fig.n 1 bis 3: Schemata für Verfahrensdurchführungen unter Verwertung von Ammoniak aus Wasser aus der Entwässerungsanlage von mit Kalkmilch behandeltem Klärschlamm für die Müllverbrennungsanlage;

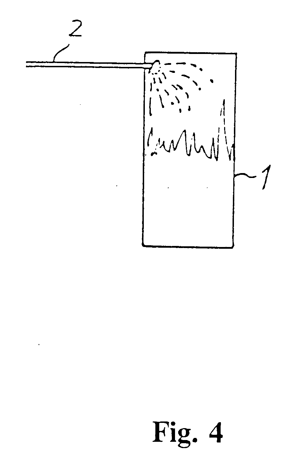

- Fig. 4: schematisch eine abgewandelte Weise der Einbringung des Ammoniaks in die Feuerung.

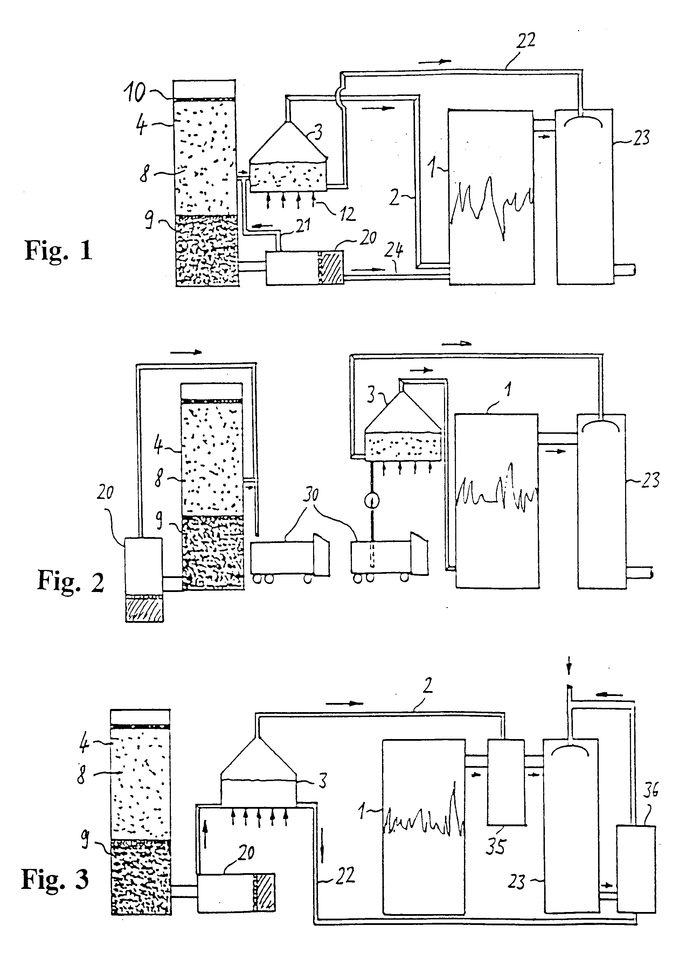

Nach Fig. 1 wird einem Heizkessel 1 einer Müllverbrennungsanlage über eine Rohrleitung 2 ein Gasstrom mit einem erheblichen Anteil von Ammoniak zugeführt, der die im Heizkessel bei der Verbrennung entstehenden Stickoxide unmittelbar in unschädliche Produkte umsetzt und die Entstehung von Dioxinen und Furanen hemmt. Die Rohrleitung 2 kommt von einer Ammoniak-Austreibanlage 3 her, die im Zusammenhang mit einem Faulturm 4 steht. Im Faulturm 4 steht oben Überstandswasser 8 und setzt sich unten Faulschlamm 9 ab. Die Oberfläche des Überstandswassers 8 ist wiederum von einer Schicht von Schwimmschlamm 10 bedeckt.

Der Schlamm aus dem Faulturm wird nach dem Faulen als Klärschlamm einer Entwässerungsanlage 20 zugeführt, die in der Zeichnung als Filterpresse dargestellt ist; es sind jedoch auch andere Typen von Entwässerungsanlagen bekannt, die z.B. mit Zentrifugen oder mit einer Trennung durch die Schwerkraft arbeiten. Er wird üblicherweise zum Zweck der Entwässerung gekalkt. Das abgesonderte "Preßwasser" ist weitgehend trübstoff-frei, jedoch ziemlich Ca(OH)₂-haltig und reich an Ammonium/Ammoniak in einer Gleichgewichtsrelation, und ist hoch-basisch eingestellt, nämlich auf einen pH-Wert in der Größenordnung von 12. Im stark basischen Medium liegt das Gleichgewicht stark überwiegend auf der Seite des Ammoniaks.

Das Preßwasser wird über eine Rohrleitung 21 abgezogen und bei der Anordnung nach Fig. 1 mit aus dem Faulturm 4 abgezogenem Überstandswasser gemischt.

Auch Überstandswasser 8 enthält nebst zahlreichen Schwebstoffen einen gewissen Gehalt an Ammoniak und Ammonium, und das Ammoniak wird aus dem Gemisch in der Austreibanlage 3 durch Einblasen von Luft 12 ausgetrieben.

Nach Fig. 4 wird das Preßwasser oder das Gemisch direkt in den Heizkessel 1 geleitet und dort versprüht. Der Effekt gleicht im wesentlichen dem der Verfahrensdurchführung nach Fig. 1.

Gemäß Fig. 1 sind die beschriebenen Maßnahmen der Ammoniakeinbringung durch zwei zusätzliche Maßnahmen ergänzt.

Die erste ergänzende Maßnahme ist, daß das die Ammoniak-Austreibanlage verlassende Wassergemisch als Waschwasser über eine Rohrleitung 22 einem Rauchgaswäscher 23 eingespeist wird, wo die insbesondere aus der Schlammbehandlung resultierenden basischen Stoffe die eingefangene Salzsäure neutralisieren.

Als zweite ergänzende Maßnahme wird weitgehend entwässerter, basisch gekalkter Schlamm über einen Transportweg 24 dem Brennmaterial zugefügt, wo er einen Teil des bei der Verbrennung insbesondere von PVC freiwerdenden Chlors sogleich bindet.

Fig. 2 zeigt die Maßnahmen nach Fig. 1 ohne Rohrverbindung zwischen der Abwasserreinigungsstelle und der Müllverbrennungsanlage. Der Transport der Wässer der gemischten Teilströme erfolgt über Tankwagen 30. Das Gemisch der Wässer wird am Ort der Abwasserkläranlage in die Tankwagen 30 geladen und zum Ort der Müllverbrennungsanlage gefahren. Die Ammoniak-Austreibanlage 3 ist an der Müllverbrennungsanlage installiert und das ausgetriebene Ammoniakgas wird dem Heizkessel eingespeist. Anschließend wird das stark basische und einen hohen Trübstoffanteil enthaltende Wasser dem Rauchgaswäscher 23 eingespeist. Diese Anlagengestaltung dürfte im allgemeinen am wirtschaftlichsten darstellbar sein und ist auch am einfachsten nachrüstbar.

Fig. 3 zeigt eine weiterhin abgewandelte Verfahrensdurchführung. Der Ammoniak wird, wobei die Wassermenge nicht zu hoch wird, nur dem aus der Schlammentwässerung extrahierten Wasser entzogen und wird bei diesem Durchführungsbeispiel einem Nachverbrennungsraum 35 eingespeist, dessen Temperatur für die Umsetzung des Stickoxide noch ausreichend hoch ist.

Das Waschwasser wird zunächst auf einen ph-Wert von 6 eingestellt und fängt hiermit im Rauchgaswäscher 23 noch ausreichend Salzsäure ein. So beladen, wird das Wasch-Abwasser einer Neutralisierstation 36 eingegeben, der andererseits Preßwasser, dem in der Ammoniak-Austreibanlage 3 der größte Teil des Ammoniaks schon entzogen worden ist und das viel Ca(OH)₂ enthält eingespeist wird. Hier erfolgt erst die Neutralisierung, auf die hin das Wasser in den Rauchgaswäscher 23 rezirkuliert wird.

Durchschnittlicher kommunaler Müll hat einen Bedarf an NH₃ für die NOₓ-Kompensation, die etwa dem Anfall an NH₃ aus der Abwasserreinigung der selben Kommune gleicht.

## Patentansprüche

1. Verfahren zur Rauchgasreinigung von Feuerungsanlagen, insbesondere Müllverbrennungsanlagen, wobei der Feuerung oder den heißen Rauchgasen von einer kommunalen Abwasserreinigungsanlage entnommenes Ammoniak gasförmig oder in Wasser gelöst zugeführt wird, dadurch gekennzeichnet, daß man den Ammoniak aus Teilströmen aus der Schlammbehandlung verwendet, und zwar zumindest teilweise aus separiertem Wasser, das man durch Eindickung von Faulschlamm erhält und das stark basisch eingestellt worden ist.

2. Verfahren nach Anspruch 1, dadurch gekennzeichnet, daß das separierte Wasser auf einen pH-Wert in der Größenordnung von 12 eingestellt worden ist.

3. Verfahren nach Anspruch 1 oder 2, dadurch gekennzeichnet, daß man die Teilströme aus der Schlammbehandlung zumindest teilweise auch aus dem Überstandswasser der Schlammfaulung in einem Schlamm-Faulturm abzieht.

4. Verfahren nach einem der Ansprüche 1 bis 3, bei dem zusätzlich aus den Rauchgasen saure Bestandteile ausgewaschen und durch basische Medien neutralisiert werden, denen Kalkmilch zugesetzt ist, dadurch gekennzeichnet, daß die basischen Medien zumindest anteilig aus Teilströmen aus der Schlammbehandlung von kommunalen Abwasserreinigungsanlagen bestehen, die mit Kalkmilch behandelt sind.

5. Verfahren nach Anspruch 4, dadurch gekennzeichnet, daß man Abwässer mit einem Schlammgehalt von 1 bis 5% verwendet.

6. Verfahren nach Anspruch 4 oder 5, dadurch gekennzeichnet, daß man die basischen Medien dem zu verbrennenden Müll beigibt.

7. Verfahren nach einem der Ansprüche 4 bis 6, dadurch gekennzeichnet, daß man zumindest teilweise als basische Medien mit Kalkmilch behandelten, entwässerten Klärschlamm verwendet.

## Claims

1. A process for the flue gas abatement of a combustion system, especially of a refuse incinerating plant, in which process ammonia in gasous form or dissolved in water are supplied to the combustion or to the hot flue gases, the ammonia being taken from a communal sewage plant, characterized in that such ammonia taken from partial streams from the sludge treatment, and more particularly, at least partially, from separated water which is obtained by the concentration of digested sludge and which has been made highly basic, is used.

2. The process as claimed in claim 1, characterized in that the separated water has been treated to have a pH value of the order of 12.

3. The process as claimed in claim 1 or in claim 2, characterized in that at least part of the partial streams from the sludge treatment is withdrawn from supernatant water of the sludge digestion in a sludge digesting tower.

4. The process as claimed in any of claims 1 through 3, in which in addition acidic components are removed from the flue gases by scrubbing and are neutralized with basic materials, to which milk of lime has been added, characterized in that such basic materials consist at least in part of materials from partial streams of the sludge treatment in a communal sewage plant, which streams have been treated with milk of lime.

5. The process as claimed in claim 4, characterized in that sewage water containing 1 to 5% sludge is utilized.

6. The process as claimed in claim 4 or claim 5, characterized in that such basic material is added to the refuse to be incinerated.

7. The process as claimed in any one of claims 4 through 6, characterized in that dewatered sewage sludge, which has been treated with milk of lime, is at least in part utilized as the said basic material.

## Revendications

1. Procédé d'épuration de gaz de fumée d'installations de chauffe, en particulier d'usines d'incinération d'ordures ménagères, dont le foyer ou les gaz de fumées chauds est/sont alimenté(s) en ammoniac en forme gazeuse ou dissout en eau sorti d'une installation communale de clarification des eaux d'égout, caractérisé en ce que l'on utilise l'ammoniac provenant de courants partiels de traitement de boues, à savoir au moins partiellement d'eau séparé obtenu par l'épaississement de boue putréfiée et ajusté à une valeur fortement basique.

2. Procédé selon la revendication 1, caractérisé en ce que l'eau séparé a été ajusté à une valeur pH à l'ordre de 12.

3. Procédé selon la revendication 1 ou 2, caractérisé en ce que l'on soutire les courants partiels du traitement de boues également au moins partiellement de l'eau supérieur de la putréfaction de boues dans une tour de putréfaction de boues.

4. Procédé selon une des revendications 1 à 3, dont de plus des composants acides sont enlevés par lavage des gaz de fumées et neutralisés par des milieus basiques auxquels on a ajouté de lait de chaux, caractérisé en ce que les milieus basiques sont constitués au moins partiellement de materiaux de courants partiels traités de lait de chaux, provenant du traitement de boues d'une installation communale de clarification des eaux d'égout.

5. Procédé selon la revendication 4, caractérisé en ce que l'on utilise des eaux d'égout ayant une teneur en boue de 1 à 5 %.

6. Procédé selon la revendication 4 ou 5, caractérisé en ce que l'on ajoute les milieus basiques à l'ordure à incinérer.

7. Procédé selon une des revendications 4 à 6, caractérisé en ce que l'on utilise au moins partiellement en tant que milieus basiques des boues de curage déshydratées et traitées de lait de chaux.
